# EUROPEAN PATENT APPLICATION

(11) **EP 1 401 112 A1**
(43) Date of publication of application: **24.03.2004**
(21) Application number: 02256457.9
(22) Date of filing: 18.09.2002
(51) Int. Cl.: H04B 1/707

(54) **Delay estimation and path selection for common and dedicated channels**

(71) Applicant: Telefonaktiebolaget L M Ericsson (Publ), 126 25 Stockholm (SE)
(72) Inventor: Ericsson, Anders Jöns Lars, 24732 Södra Sandby (SE); Reial, Andres, 22241 Lund (SE); Palenius, Torgny, 24650 Löddeköpinge (SE)
(74) Representative: O'Connell, David Christopher

(57) **Abstract**

The delays, associated with multipath components of a signal transmitted on a dedicated channel, are estimated by estimating the delays associated with multipath components of a signal transmitted on a common channel, determining which of the multipath components of the signal transmitted on the common channel correspond to multipath components of the signal transmitted on the dedicated channel, and using the relevant estimated delays as estimates of the delays associated with the respective corresponding multipath components of the signal transmitted on the dedicated channel.

## Description

### TECHNICAL FIELD OF THE INVENTION

This invention relates to a method of estimating the delays on a radio channel of a wireless mobile communication system.

### BACKGROUND OF THE INVENTION

Typically, in a radio communication system, in which signals are transmitted from a base station to a mobile station, the signals can be propagated over multiple paths. The mobile station may be in a direct line of sight of the base station but, also, the signals may be reflected off other nearby objects.

In many cases, these reflected signals are a cause of interference. However, in the case of Code Division Multiple Access (CDMA) systems which use rake receivers, the energy in these reflected signals is used constructively.

In a CDMA system, a transmitted signal is spread with a spreading code before transmission, and the receiver includes a channel estimator, which estimates the properties of the transmission channel, and a despreader, which applies the spreading code to the received signal, taking this channel estimate into consideration, in order to produce an estimate of the transmitted signal.

As mentioned above, the received signal at the receiver may contain several multipath components, that is, several copies of the transmitted signal. Each of the multipath components is delayed by a different amount, depending on the lengths of the respective paths taken by those components. In order to decode the signal, the receiver must estimate the associated time delay of each of the received multipath components. These estimated time delays are than used to produce the required channel estimates, and the spreading code is applied to each of the received multipath components with the appropriate time delay.

In order to optimize the performance of this system, it is necessary to detect as many as possible of the multipath components, and to estimate the associated time delays thereof as accurately as possible.

A system of this type is described in Chapters 3 and 6 of H.Holma and A.Toskala, eds., "WCDMA for UMTS" Wiley & Sons, 1^{st} ed. 2000.

In order to increase the capacity of a cellular mobile communications system, it is possible to divide cells into smaller sectors by transmitting signals using directional antennas. A signal intended for a specific user can be transmitted using a directional antenna to one specific sector within the cell. Also, the power of the transmitted signals can be controlled so that the signal received by the user has the required power but does not have excessive power. These measures ensure that the transmitted signal interferes less with the signals being transmitted to other users. As discussed above, the receiver at the user device must estimate the associated time delay of each of the received multipath components of the signal received on the dedicated channel, before making the required channel estimates and decoding the received signals.

Meanwhile, common channels, such as broadcast channels and common pilot channels, are transmitted such that they can be received by all users within the cell. For example, where the base station is located in the centre of a cell, it may transmit using an omnidirectional antenna, at a power which is sufficiently high that the signal can be successfully received even at the edge of the cell. In a similar way to that described above, the receiver at the user device must estimate the associated time delay of each of the received multipath components of the signal received on the common channel, before decoding it.

A system of this type is described in Chapter 11 of H.Holma and A.Toskala, eds., "WCDMA for UMTS" Wiley & Sons, 1^{st} ed. 2000.

### SUMMARY OF THE INVENTION

A difficulty in estimating the delays, associated with each of the received multipath components of a signal received on a dedicated channel, is that the dedicated channel is transmitted with relatively low power. Moreover, a pilot signal is transmitted on the dedicated channel for only a small number of symbols in each timeslot. These factors mean that the performance of the delay estimation process is compromised.

According to the present invention, there is provided a method of estimating the delays associated with multipath components of a signal transmitted on a dedicated channel, the method comprising estimating the delays associated with multipath components of a signal transmitted on a common channel, and using the estimated delays as estimates of the delays associated with corresponding multipath components of the signal transmitted on the dedicated channel.

The multipath components of the dedicated channel are a subset of the multipath components of the common channel.

Preferably, the estimates of the delays associated with corresponding multipath components of the signal transmitted on the dedicated channel are then used in estimating the channel impulse response properties of the dedicated channel.

Preferably, the step of estimating the delays associated with multipath components of the signal transmitted on the common channel comprises estimating said delays repeatedly over time and averaging the repeated estimates.

In one embodiment, the method comprises, as a preliminary step, directly estimating the delays associated with multipath components of a signal transmitted on a dedicated channel and also estimating the delays associated with multipath components of a signal transmitted on a common channel, and thereafter using the estimated delays associated with multipath components of the signal transmitted on the common channel as estimates of the delays associated with corresponding multipath components of the signal transmitted on the dedicated channel, only in the event that the delays estimated by the two different methods in the preliminary step are sufficiently similar.

According to another aspect of the present invention, there is provided a communications device which estimates the delays associated with multipath components of a signal transmitted on a dedicated channel, by a method according to the first aspect of the invention.

It should be emphasised that the term "comprises/comprising" when used in this specification is taken to specify the presence of stated features, integers, steps or components but does not preclude the presence or addition of one or more other features, integers, steps, components or groups thereof.

### BRIEF DESCRIPTION OF DRAWINGS

Figure 1 shows a part of a mobile communications network in accordance with the present invention.
Figure 2 is a schematic illustration of a mobile communications device in accordance with the invention.
Figure 3 is a flow chart showing a method in accordance with another aspect of the invention.

### DETAILED DESCRIPTION OF PREFERRED EMBODIMENTS

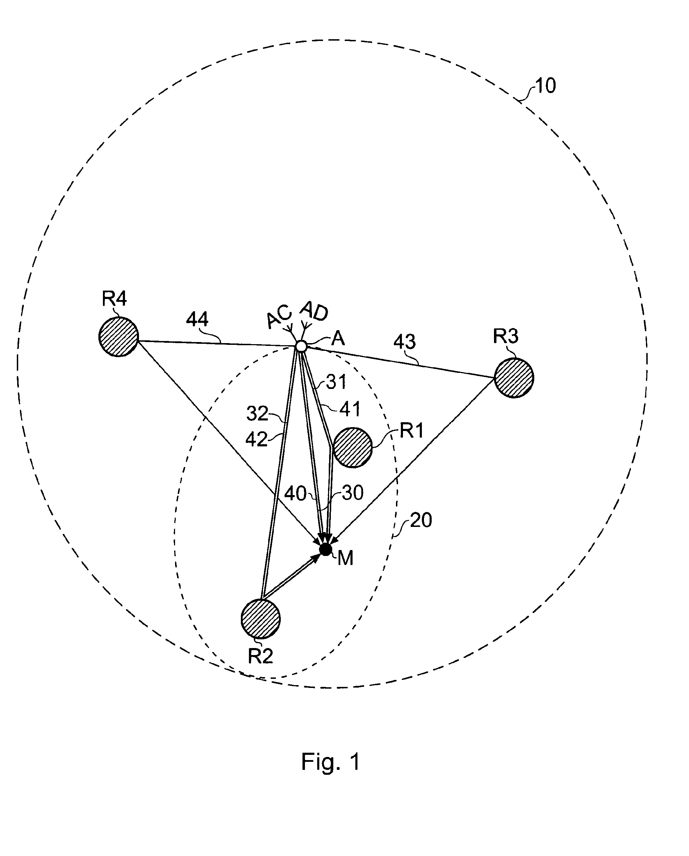

Figure 1 is a schematic representation of a part of an area served by a mobile communications network. In this preferred embodiment of the invention, the network is a cellular network, which operates using Code Division Multiple Access (CDMA). That is, signals which are transmitted from a transmitter to a receiver are spread with a spreading code, and must be despread in the receiving device as part of the decoding process.

The present invention is described herein with reference to the transmissions from a base station A within a cell 10 to a mobile communications device M, which is free to move within the cell 10, or from one cell to another.

The base station transmits on at least one common channel, and on multiple dedicated channels. Common channels are used for transmitting messages to all devices within the cell 10, and are transmitted from an omnidirectional antenna AC, which ensures that the channel can be received throughout the cell. For example, the common channels include broadcast channels and a common pilot channel (CPICH).

Dedicated channels are used for transmitting messages to respective specific devices within the cell 10, and are transmitted from directional antennas. Thus, signals intended for the mobile communications device M, in the location shown in Figure 1, are transmitted from the directional antenna AD, which has a coverage area 20. By using other directional antennas (not shown) with different respective coverage areas, it is possible to sectorize the cell, which means that signals transmitted on one dedicated channel are less likely to interfere with signals transmitted on another dedicated channel.

Figure 1 also shows four objects, or clusters of objects, R1, R2, R3, R4, Which can reflect transmitted signals. For example, these objects may be buildings.

The presence of the reflective objects R1, R2, R3, R4 means that the signals received at the mobile communications device M will contain a plurality of multipath components of the transmitted signals.

More particularly, considering the illustrative situation shown in Figure 1, the signal transmitted on the dedicated channel from the base station A to the coverage area 20 will reach the mobile communications device M over a direct line-of-sight path AD-M 30, as well as over two reflected paths AD-R1-M 31 and AD-R2-M 32. At the same time, the signal transmitted on the common channel from the base station A throughout the cell 10 will reach the mobile communications device M over a direct line-of-sight path AC-M 40, as well as over four reflected paths AC-R1-M 41, AC-R2-M 42, AC-R3-M 43, and AC-R4-M 44.

In order to obtain the best possible estimates of the signal transmitted on the dedicated channel, it is necessary to use the best possible channel estimates, including the best possible estimates of the delays associated with the two reflected paths AD-R1-M 31 and AD-R2-M 32.

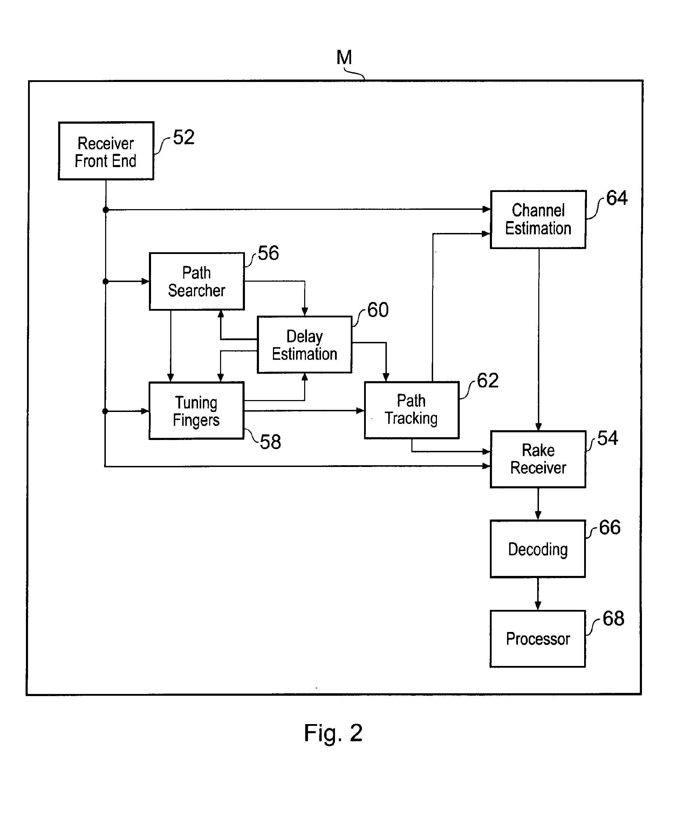

Figure 2 is a block schematic diagram of a radio receiver in accordance with an aspect of the invention. In this illustrated embodiment of the invention, the radio receiver is implemented in the mobile communications device M shown in Figure 1. The mobile communications device M may be any form of portable radio communication equipment or mobile radio terminal, such as a mobile telephone, pager, communicator, electronic organiser, smartphone, personal digital assistant (PDA), or the like. Moreover, the invention can also be used in devices which are not themselves mobile.

The mobile communications device M contains many conventional features, and will be described herein only to the extent necessary for an understanding of the present invention. In particular, the device will of course also include transmission circuitry, which will not be described at all herein.

The device M has an antenna 50, which receives transmitted signals. As is conventional, the received signals are processed in receiver front-end circuitry 52, which, amongst other things, filters and downconverts the received signals, and converts them from analog to digital. The receiver front-end circuitry 52 outputs digital samples, which are supplied to a rake receiver 54.

As is conventional, the rake receiver is used to decode the received signals, using the signal energy in several multipath components of the received signals. In order to be able to do this, the rake receiver 54 requires knowledge of the multipath delays and estimates of the channel impulse response for all of the paths. In order to produce the required estimates of the channel impulse responses for the paths, it is also necessary to use estimates of the delays associated with those paths.

The receiver therefore also includes means for providing the required delay estimates and estimates of the channel impulse response.

In general terms, it is considerably more complex to produce the required delay estimates than it is to produce the estimates of the channel impulse response using the estimated delays.

Therefore, when decoding the signal received on a dedicated channel, and producing the estimates of the channel impulse responses associated with the multiple paths taken by that signal, it is also necessary to use estimates of the delays associated with those paths. The present invention relies on the fact that the multiple paths taken by signals on the dedicated channel are a subset of the multiple paths taken by signals on the common channel, as can be seen in Figure 1. Moreover, the estimates of the delays associated with the multiple paths taken by signals on the common channel are often acceptably accurate as estimates of the delays associated with the multiple paths taken by signals on the dedicated channel.

That is because the antennas AD, AC, used for transmissions on the dedicated channel and on the common channel respectively, are often mounted sufficiently close together on a base station. The result is that the difference between the delays associated with the multiple paths taken by signals on the dedicated channel and the corresponding delays associated with the multiple paths taken by signals on the common channel may be significantly less than one chip period of the transmitted signal.

The receiver of Figure 2 therefore advantageously uses the signals received on a common channel for providing the required delay estimates associated with the multiple paths taken by signals on the dedicated channel. These delay estimates are then used for providing estimates of the channel impulse response of the dedicated channel.

In the receiver of Figure 2, the receiver front-end circuitry 52 outputs digital samples of the received signals, including the signal received on a common channel, for example the common pilot channel CPICH, and the signal received on a dedicated channel. These samples are supplied to a path searcher 56 and to a small set of despreaders tuned to closely-spaced delay values, 58, below referred to as "tuning fingers".

The path searcher 56 computes instantaneous impulse response estimates over a range of delays that constitutes a significant fraction of the maximal delay spread allowed by the system. As is well known to the person skilled in the art, the complex delay profile (CDP) or power delay profile (PDP) for a given delay value is estimated, for example by correlating the received data for pilot symbols with an appropriately delayed copy of the spreading sequence. The path searcher 56 can therefore be used as a means to detect the existence of paths, its output resolution being lower than that required by the rake receiver 54.

The tuning finger 58 produces a high-resolution instantaneous CDP or PDP over a narrow delay window. For example, the tuning finger 58 may be used to locally refine the coarse CDP or PDP information provided by the path searcher 56.

The outputs from the path searcher 56 and tuning fingers 58 are supplied to a delay estimator 60, which calculates average CDP or PDP values such that the information is sufficiently reliable. The averaging process operates across many channel fading cycles so that it is not significantly affected by the instantaneous fading. These calculated average values are fed back to the path searcher 56 and tuning fingers 58 such that they can use the best available estimates of the delays when making their measurements.

The calculated average CDP or PDP values from the delay estimator 60, and the outputs from the tuning fingers 58, are supplied to a path tracking block 62. This block is used to ensure that the delays are calculated consistently over time for different paths, and produces the final reported delay values. This block uses a set of signal processing and logical algorithms to extract physical path location information from the path searcher 56 and tuning finger 58 outputs, in order to present delay estimates consistently to subsequent stages. The unchanging assignment of paths to specific rake receiver fingers is necessary to support power and interference estimation for each finger. Various different algorithms well known in the art may be used, depending on system parameters and allowable complexity.

These reported delay estimates, produced using the signals received on the common channel, are therefore passed to a channel estimation block 64. The channel estimation block 64 also receives from the front-end circuitry 52 digital samples of the signal received on a dedicated channel.

It should be noted that, although the delay estimates produced using the common channel are often acceptable as estimates of the delays on the dedicated channel, channel estimates produced using the common channel would not be expected to be acceptable as estimates of the properties of the dedicated channel.

Channel estimation for the reported delays is then performed by tuning despreaders to these delays and using the despread pilot symbols to deduce the complex path coefficient for a given delay. A variety of filtering or smoothing methods may be applied to these instantaneous estimates, in order to improve the quality of the channel estimates. These methods are well known in the art.
As mentioned above, the multipath components of the signal received on the dedicated channel are in principle a subset of the multipath components of the signal received on the common channel. However, at a particular time instant, some of the rays on the different channels might be faded down. This fading will not necessarily be correlated for the two different radio channels, and thus, instantaneously, the radio channel delays for the dedicated channel are not always a subset of the current delays on the common channel. However, if a sufficiently long average is taken for the common channel, spanning many fading cycles, the set of delays in the dedicated channel can be found within the set for the common channel. Therefore, as mentioned above, the delay estimation algorithm should incorporate some type of memory (averaging) function. Numerous implementations of such averaging are available in the art.

Once the candidate paths are identified using the common channel CPICH, and the channel estimates for all these paths are computed using pilot signals on the dedicated channel, a number of methods may be used to determine the paths that comprise the dedicated channel propagation environment. Thus, in the case of the environment shown in Figure 1, the delay estimates made using the common channel will identify the direct path 40, the paths 41, 42 which include reflections off objects within the coverage area of the dedicated channel, and the paths 43, 44 which include reflections off objects outside the coverage area of the dedicated channel. However, in order to decode the dedicated channel, it is necessary to identify the delays on those paths which correspond to the paths 30, 31, 32 taken by the dedicated channel.

The methods which may be used include, but are not limited to, (1) selecting the paths with the best SIR (related to the dedicated channel), (2) selecting the paths with the best SIR while applying additional thresholding with respect to the maximum magnitude or the total interference level, (3) using the noise and interference statistics to evaluate the likelihood of each candidate path being a path in the dedicated radio channel, (4) using model order selection methods where the received data is matched to different channel structure hypotheses.

After the channel estimation in block 64, the channel estimates are passed to the rake receiver 54, in which the signal powers from the different multipath components of the signal received on the dedicated channel are combined. The resulting signal estimates are passed to decoding circuitry 66, and then to a processor block 68 for further handling.

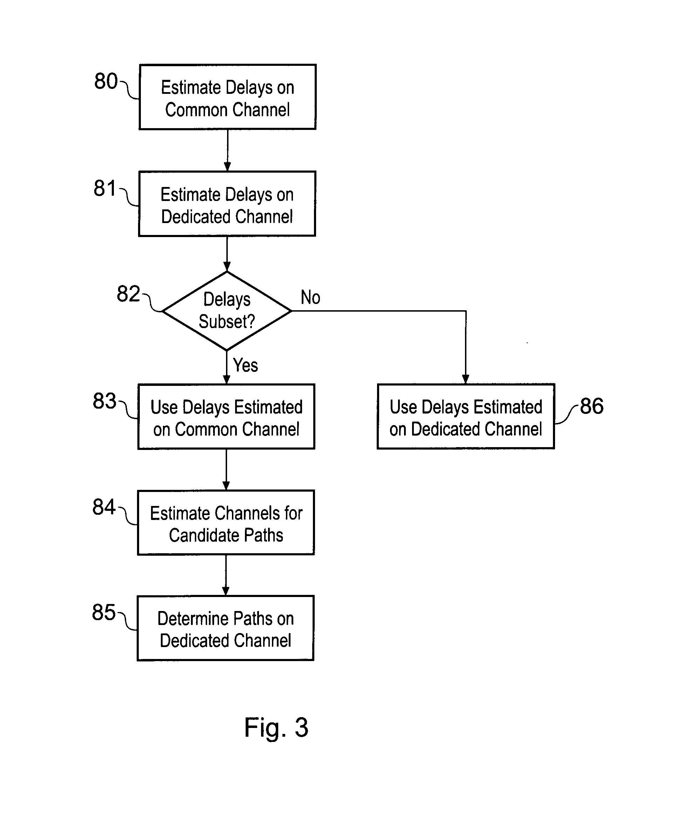

Figure 3 is a flow chart showing a process in accordance with an aspect of the invention. In addition to the delay and channel estimation steps outlined above, this process also includes steps to ensure that the estimates of the delays associated with the multiple paths taken by signals on the common channel are acceptably accurate as estimates of the delays associated with the multiple paths taken by signals on the dedicated channel.

Given the current practical considerations for base station antenna setup, it is possible, albeit unlikely, that the antenna spacing is sufficiently large (for example over 20-30m for a WCDMA system), that the difference between the delays on the dedicated channel and common channel become significant, compared to the chip rate. This would render the delay estimates computed using the CPICH unusable, at least directly.

Therefore, the method shown in Figure 3 tests whether the delays on the multipath components of the signal on the common channel are in fact accurate estimates of the delays on the multipath components of the signal on the common channel. In step 80, the delays on the multipath components of the signal on the common channel are estimated, as described above. In step 81, the delays on the multipath components of the signal on the dedicated channel are estimated, as is conventional. The delay estimation is as described above, but using digital samples of the signal received on the dedicated channel, rather than the common channel, separated by means of the path searcher 56 and tuning fingers 58.

In step 82, the estimated delays are compared. If it is found, based on the estimated delays, that the paths taken by the dedicated channel are a subset of the paths taken by the common channel, then it is assumed in step 83 that the delays on the multipath components of the signal on the common channel are accurate estimates of the delays on the multipath components of the signal on the common channel. In that case, the process passes to step 84, in which the channels on the candidate paths are estimated, as described above, using the estimated delays on the multipath components of the signal on the common channel. The process then passes to step 85, in which it is determined which of the candidate paths correspond to paths on the dedicated channel, as described above. The channel estimation is then performed, again as described above with reference to Figure 2.

If, on the other hand, it is found in step 82 that the paths taken by the dedicated channel are not a subset of the paths taken by the common channel, it is assumed that the delays on the multipath components of the signal on the common channel are not accurate estimates of the delays on the multipath components of the signal on the common channel. In that case, the process passes to step 86, in which the estimated delays based on the dedicated channel itself are taken, and are used in the channel estimation process, again as described with reference to Figure 2.

Thus, Figure 3 shows one method for verifying the similarity between the dedicated and common channels. As an alternative, this can be tested by estimating the delays using the common channel, as described above, and then using these estimates in the tuning fingers block 58 together with the data obtained on the dedicated channel. If the delays on the multipath components of the signal on the common channel are not accurate estimates of the delays on the multipath components of the signal on the common channel, the outcomes will not be consistent.

It should be noted that the step of verifying the similarity between the dedicated and common channels must be typically only be performed once, or at least very infrequently compared to the delay estimation task. It is not performed before each delay estimation.

It should also be emphasised that, in many cases, there will already be sufficient information to determine that the estimates of the delays associated with the multiple paths taken by signals on the common channel are acceptably accurate as estimates of the delays associated with the multiple paths taken by signals on the dedicated channel. In such cases, the method in accordance with the invention can omit the steps which are provided to test this assumption. For example, referring to Figure 3, the method can proceed direct from step 80 to step 83.

Thus, since the common channel (CPICH) is transmitted constantly rather than intermittently, and since it is in general received by a mobile station with higher power than the dedicated channel, carrying out the delay estimation on the basis of the common channel allows an improved performance of the delay estimation. For example, the delay estimation can be performed more quickly, or less frequently, or with lower processor power consumption, or with higher precision, or with some suitable trade-off between these advantages.

## Claims

1. A method of estimating the delays associated with multipath components of a radio signal transmitted from a first antenna of a transmitter to a receiver on a dedicated channel, the method comprising estimating the delays associated with multipath components of a signal transmitted on a common channel transmitted from a second antenna of said transmitter, and using the estimated delays as estimates of the delays associated with corresponding multipath components of the signal transmitted on the dedicated channel.

2. A method as claimed in claim 1, further comprising using the estimates of the delays associated with corresponding multipath components of the signal transmitted on the dedicated channel in estimating properties of the dedicated channel.

3. A method as claimed in claim 1, wherein the step of estimating the delays associated with multipath components of the signal transmitted on the common channel comprises estimating said delays repeatedly over time and averaging the repeated estimates.

4. A method as claimed in claim 1, further comprising determining which of the multipath components of the signal transmitted on the common channel correspond to multipath components of the signal transmitted on the dedicated channel.

5. A method as claimed in claim 4, wherein the step of determining which of the multipath components of the signal transmitted on the common channel correspond to multipath components of the signal transmitted on the dedicated channel is performed by selecting those paths with the best SIR on the dedicated channel.

6. A method as claimed in claim 5, wherein the step of determining which of the multipath components of the signal transmitted on the common channel correspond to multipath components of the signal transmitted on the dedicated channel is performed by selecting those paths with the best SIR on the dedicated channel, while also applying an additional threshold with respect to the maximum magnitude or the total interference level.

7. A method as claimed in claim 4, wherein the step of determining which of the multipath components of the signal transmitted on the common channel correspond to multipath components of the signal transmitted on the dedicated channel is performed by using noise and interference statistics to evaluate the likelihood of each candidate path being a path in the dedicated radio channel.

8. A method as claimed in claim 4, wherein the step of determining which of the multipath components of the signal transmitted on the common channel correspond to multipath components of the signal transmitted on the dedicated channel is performed by comparing data received on the dedicated channel with data which would have been expected to have been received on the dedicated channel, based on different hypotheses as to which of the multipath components of the signal transmitted on the common channel correspond to multipath components of the signal transmitted on the dedicated channel.

9. A method as claimed in claim 1, further comprising, as a preliminary step, determining whether the delays associated with multipath components of a signal transmitted on a common channel transmitted from said transmitter are acceptable estimates of the delays associated with corresponding multipath components of the signal transmitted on the dedicated channel.

10. A method as claimed in claim 9, wherein the step of determining whether the delays associated with multipath components of a signal transmitted on a common channel transmitted from said transmitter are acceptable estimates of the delays associated with corresponding multipath components of the signal transmitted on the dedicated channel comprises:
(1) directly estimating the delays associated with multipath components of a signal transmitted on a dedicated channel;
(2) estimating the delays associated with multipath components of a signal transmitted on a common channel; and
(3) thereafter, using the estimated delays associated with multipath components of the signal transmitted on the common channel as estimates of the delays associated with corresponding multipath components of the signal transmitted on the dedicated channel, only in the event that the delays estimated in step (1) are sufficiently similar to a subset of the delays estimated in step (2) .

11. A method as claimed in any one of claims 1 to 10, wherein the common channel is a common reference channel carrying pilot symbols.

12. A method as claimed in claim 11, wherein the communication system is a WCDMA system and the common reference channel carrying pilot symbols is a CPICH.

13. A communications device comprising:
means for receiving multipath components of a radio signal transmitted from a first antenna of a transmitter on a dedicated channel;
means for receiving multipath components of a radio signal transmitted from a second antenna of said transmitter on a common channel;
means for estimating the delays associated with the multipath components of the signal transmitted on said common channel; and
means for estimating the delays associated with the multipath components of the signal transmitted on said dedicated channel; wherein the estimated delays associated with the multipath components of the signal transmitted on the common channel are used as estimates of the delays associated with corresponding multipath components of the signal transmitted on the dedicated channel.

14. A communications device as claimed in claim 13, further comprising:
means for estimating properties of the dedicated channel that is adapted to use the estimates of the delays associated with corresponding multipath components of the signal transmitted on the dedicated channel.

15. A communications device as claimed in claim 13, wherein the means for estimating the delays associated with multipath components of the signal transmitted on the common channel estimates the delays repeatedly over time and averages the repeated estimates.

16. A communications device as claimed in claim 13, further comprising means for determining which of the multipath components of the signal transmitted on the common channel correspond to multipath components of the signal transmitted on the dedicated channel.

17. A communications device as claimed in claim 16, wherein the means for determining which of the multipath components of the signal transmitted on the common channel correspond to multipath components of the signal transmitted on the dedicated channel is adapted to select those paths with the best SIR on the dedicated channel.

18. A communications device as claimed in claim 17, wherein the means for determining which of the multipath components of the signal transmitted on the common channel correspond to multipath components of the signal transmitted on the dedicated channel is adapted to select those paths with the best SIR on the dedicated channel, while also applying an additional threshold with respect to the maximum magnitude or the total interference level.

19. A communications device as claimed in claim 16, wherein the means for determining which of the multipath components of the signal transmitted on the common channel correspond to multipath components of the signal transmitted on the dedicated channel is adapted to use noise and interference statistics to evaluate the likelihood of each candidate path being a path in the dedicated radio channel.

20. A communications device as claimed in claim 16, wherein the means for determining which of the multipath components of the signal transmitted on the common channel correspond to multipath components of the signal transmitted on the dedicated channel is adapted to compare data received on the dedicated channel with data which would have been expected to have been received on the dedicated channel, based on different hypotheses as to which of the multipath components of the signal transmitted on the common channel correspond to multipath components of the signal transmitted on the dedicated channel.

21. A communications device as claimed in claim 13, further comprising means for determining whether the delays associated with multipath components of a signal transmitted on a common channel transmitted from said transmitter are acceptable estimates of the delays associated with corresponding multipath components of the signal transmitted on the dedicated channel.

22. A communications device as claimed in claim 21, wherein the means for determining whether the delays associated with multipath components of a signal transmitted on a common channel transmitted from said transmitter are acceptable estimates of the delays associated with corresponding multipath components of the signal transmitted on the dedicated channel comprises:
(1) means for directly estimating the delays associated with multipath components of a signal transmitted on a dedicated channel;
(2) means for estimating the delays associated with multipath components of a signal transmitted on a common channel; and
(3) means for using the estimated delays associated with multipath components of the signal transmitted on the common channel as estimates of the delays associated with corresponding multipath components of the signal transmitted on the dedicated channel, only in the event that the delays estimated by the means for estimating in (1) are sufficiently similar to a subset of the delays estimated by the means for estimating in (2).

23. A communications device as claimed in any one of claims 13 to 22, wherein the common channel is a common reference channel carrying pilot symbols.

24. A communications device as claimed in claim 23, wherein the communications device is adapted for use in WCDMA system and the common reference channel carrying pilot symbols is a CPICH.
